# EUROPEAN PATENT SPECIFICATION

(11) **EP 1 399 028 B1**
(45) Date of publication and mention of the grant of the patent: **11.10.2006**
(21) Application number: 02764613.2
(22) Date of filing: 01.07.2002
(51) Int. Cl.: A23C 9/154, A23C 9/156, A23C 9/137, A23L 2/38, A23L 2/70

(54) **CLEAR DAIRY DRINK AND METHOD FOR PRODUCING SAME**
KLARE GETRÄNKE AUF DER BASIS VON MILCH UND DEREN HERSTELLUNG
BOISSON LACTEE CLAIRE ET PROCEDE DE FABRICATION CORRESPONDANT

(30) Priority: 29.06.2001 EP 01202518
(43) Date of publication of application: 24.03.2004
(73) Proprietor: Campina Nederland Holding B.V., 5301 LB Zaltbommel (NL)
(72) Inventor: KLOEK, William, NL-5467 BR Veghel (NL); SMITS, Antonius, Maria, Gerardus, NL-5406 TP Uden (NL); ZUIDBERG, Antien, Frances, NL-5262 BK Vught (NL)
(74) Representative: Plaisier, Aart
(86) International application number: PCT/EP2002/007287
(87) International publication number: WO 2003/003843

(56) References cited:
- EP-A- 0 473 270
- US-A- 3 419 398
- US-A- 5 360 625
- US-A- 5 750 183
- US-A- 6 096 870
- DATABASE WPI Week 197108 Derwent Publications Ltd., London, GB; AN 1971-14816s XP002186421 & JP 46 006815 B (MORITO IKEDA)

## Description

The present invention relates to a clear dairy drink and a method for producing the drink.

In the food and drink industry there is a tendency to produce healthier products. On the other hand however, especially younger consumers prefer products having a more modern and dynamic image. Healthy products do not usually meet these requirements.

Dairy products, such as milk, are for example generally considered to be a healthy drink. Younger consumers do however usually prefer clear soft drinks.

It is therefore the object of the present invention to provide a clear drink based on milk.

In the research for a clear milk beverage, it was surprisingly found that adjusting the pH of an acidified milk drink that optionally comprises pectin to near neutral resulted in a clear dairy drink.

The object stated above is thus achieved according to the invention by a clear dairy drink, comprising a milk product as the main ingredient and having an extinction in the range from more than 400 to 800 nm of less than 1 measured in a quartz cell having an optical path length of 1 cm. The extinction in this nanometer range is preferably less than 0.8, more preferably less than 0.6, even more preferably less than 0.4, most preferably less than 0.2. It was found that 654 nm is particularly useful for measuring the extinction.

The preparation of clear whey protein-based beverages is known in the art (e.g. US 5,641,531). However, this concerns an acid beverage, using defatted whey protein isolate. Moreover, it does not mention the use of a negatively charged polysaccharide such as pectin.

Similarly, EP-A 0473270 describes a transparent liquid or gel product containing whey proteins, from which all other milk components (casein, salts, saccharides, etc.) have been removed. US 6,096,870 and US 5,750,183 are also concerned with preparing more or less transparent liquids from whey proteins.

JP-A 46-6815 discloses protease treatment of milk, separation of the decomposition solution and adding spice and fruit juice to the obtained transparent solution.

A clear dairy drink according to the invention can be obtained by a method comprising the steps of:
a) providing a milk product of acid pH;
b) optionally subjecting the product to a temperature treatment and/or an optional homogenisation treatment, and
d) adjusting the pH of the product to about neutral.

The milk product of acid pH may for example be milk, buttermilk or yoghurt, the pH of which lies within the range between 3.8 and 4.2 and is preferably 4 and is either the natural pH (yoghurt or buttermilk) of the product or adjusted to the desired value (milk).

The milk product may optionally further comprise a negatively charged polysaccharide, such as pectin. The provision of a mixture of a negatively charged polysaccharide and a milk product of acid pH is for example achieved by mixing pectin and milk and adjusting the pH of the mixture to about 3.8 to 4.2, preferably to about 4.

Alternatively, the provision of a mixture of a negatively charged polysaccharide and a milk product of acid pH is achieved by mixing pectin and buttermilk or yoghurt. The milk products used here already have an acid pH around 4.

"Milk product" as used in this application is intended to comprise low-fat milk, skimmed milk, buttermilk and yoghurt. It is preferred to use milk having less than 0.5% fat.

It was surprisingly found that particularly good results can be obtained when UHT-treated milk is used.

The negatively charged polysaccharide, if present, is selected from the group consisting of pectin, alginate, carboxy methyl cellulose and polyglycol alginate, and is preferably pectin.

Pectin is usually classified according to its degree of esterification (DE). There are two main categories, namely low (methyl) ester (LM) pectin, having a DE of less than 50% and high (methyl) ester (HM) pectin having a DE of more than 50%. According to the invention pectin is used to stabilise the acidified protein during processing. For this function, both pectin types are suitable.

In addition to a milk product and optionally a negatively charged polysaccharide such as pectin, the mixture may further comprise one or more of the ingredients selected from the group consisting of sugar, fruit juice, fruit mix (a clear mixture of mashed fruits in which there may still be some cell material present), flavours, food-grade acids, such as lactic acid, malic acid, citric acid or mixtures thereof, stabilisers, colorants, non-caloric sweeteners, maltodextrins, non-digestible fibers, nutritional ingredients, etc. Sugar can be used for adjusting the taste but also as a dispersion aid for pectin. Fruit juice and/or fruit mix are added to obtain the desired taste.

The main ingredient of the invention is the milk product as defined above. The ratio between the milk product and the other ingredients may be 80:20, preferably 65:35, more preferably 60:40. In dairy drinks of a low protein content the ratio varies from 40:60 to 35:65 to 20:80.

The amount of HM pectin, if present, based on the amount of the clear dairy drink lies between 0.10 and 0.55% (w/w), preferably between 0.35 and 0.45% (w/w) and is most preferably about 0.40% (w/w). The amount of LM pectin,if present, based on the amount of the clear dairy drink lies between 0.01 and 0.15% (w/w), preferably about 0.05% (w/w).

The about neutral pH to which the drink is adjusted to make it transparent is a pH between about 6 and 7.5, preferably about 6.5 and 7, more preferably about 6.75. It is preferred to use food grade means to adjust the pH back to neutral.

It was surprisingly found that the final transparency of the product varies with the acidifier used. Optimal transparencies were obtained with organic carboxylic acids having a chain length of 3 to 6 carbon atoms. Acids having 3 carbon atoms are lactic acid and malonic acid. Acids with 4 carbon atom are succinic acid and malic acid. Glutaric acid has 5 carbon atoms whereas citric acid and adipic acid each have 6 carbon atoms. The extinction at 654 nm of the clear dairy drink obtained when these acids are used to adjust the pH is lower than 1.

It was found that after adjusting the pH to an acidic value energy may optionally be added to the drink. Energy can be administered in the form of shear. High shear can be administered to the drink by means of a homogenisation treatment. An additional homogenisation may be performed either before or after adjusting the pH of the drink to about neutral. Preferably, the temperature of the homogenisation step is approximately 55°C. The homogenisation treatments are performed at 150-250 bar, preferably 250 bar. Either of the two homogenisation treatments may also be performed more than once.

To safeguard a hygienic condition of the drink, it can optionally be heat treated, e.g. pasteurised. Such pasteurisation is a treatment of 10-20, preferably 15 seconds at 85-95°C, preferably 90°C. Alternatively, the drink can be microfiltered using an 0.2 µm filter to remove bacteria. An additional advantage of this filtering step is also that the extinction of the drink is lowered even further.

It was surprisingly found that a certain storage time at low temperature below 10°C, preferably below 8°C, optimally at 5°C during about 4 days, further increased the transparency of the drink. After heating the drink becomes again milky white. This effect can be reversed by cooling. Thus, the transparency induced by cooling is reversible.

The drink according to the invention can also be used as a basis for special nutritional applications, e.g. sports or diet drinks. Ingredients that may then be added in the process of making the clear drink, are e.g. peptide preparations enriched in specific amino acids. Only those nutritional ingredients will be used that will not reduce the clarity of the product. For example, the clear glutamine peptide WGE80GPA (from DMV International, the Netherlands) can be incorporated in such a drink.

It is furthermore possible to add lactic acid or probiotic bacteria. These should be added after the pasteurisation or microfiltration treatment in an amount that will not make the drink turbid again.

According to a very practical embodiment of the invention the clear dairy drink is provided in powdered form. After drying an acidified milk product the pH of which is brought back to neutral (e.g. pH 6.75) according to the invention, a powder is obtained that upon reconstitution with water gives again a clear dairy drink with an extinction at 654 nm below 1. The drying can be performed by means of spray drying, reduced pressure drying or microwave assisted drying and is preferably freeze drying.

The present invention is further illustrated in the Examples that follow. When pectin was used in the Examples it was 6 HM pectin (type JM 150; Hercules - Copenhagen (Denmark)) unless otherwise indicated.

### EXAMPLES

### EXAMPLE 1

### General recipe for clear milk drink with pectin

The recipe for 1 kg milk drink of the invention is as follows.

4 g Pectin and 20 g sugar are mixed in dry form. The mixture thus obtained is dispersed in 267 g water at 80°C in a vortex and hydrated at the same temperature for 2 hours.

605 g skimmed UHT-milk is cooled to 4°C and 24 g sugar is added. The milk/sugar solution and pectin/sugar solution are mixed leading to a temperature of 20-25°C. The solution thus obtained is quickly cooled to 4°C in ice water.

An additional amount of either 80 g fruit concentrate or water is added. 20% (W/w) citric acid was added until a pH of 4 was reached.

After a pasteurisation treatment during 15 sec. at 90°C, the solution is cooled to about 55°C. Subsequently, the solution is homogenised after which the pH is adjusted with 8% sodium hydroxide or other food-grade base. The pH is adjusted to about neutral to obtain the clear dairy drink of the invention. After pH adjustment to neutral, an optional additional homogenisation treatment may be performed on the drink.

The transparency of thus obtained drink can be determined by measuring the extinction at 654 nm.

### EXAMPLE 2

### Determination of optimal pH

The mixture used in this series of experiments contains water instead of fruit concentrate. The pH was adjusted after homogenisation. Sample 5 was subjected to one or two extra homogenisation steps after 4 days storage at 4°C.

The results are shown in Table 1.

**Table 1**

| Sampl e | pH | extinction at 654 nm (fresh sample) | extinction at 654 nm (after 4 days at 4°C) | turbidity (visual) |
|---|---|---|---|---|
| 1 | 3.8 | 3.350 | n.d. | milky |
| 2 | 5.0 | 3.350 | n.d. | milky |
| 3 | 6.0 | 2.753 | 2.549 | opaque |
| 4 | 6.5 | 0.916 | 0.730 | transparent |
| 5 | 6.75 | 0.736 | 0.590 | transparent |
| 5a | 6.75* | n.d. | 0.196 | clear |
| 5b | 6.75** | n.d. | 0.189 | clear |
| 6 | 7.0 | 0.939 | 0.785 | transparent |

| | | | | |
|---|---|---|---|---|
| * one additional homogenisation step at 250 bar ** two additional homogenisation steps at 250 bar | | | | |

From the table it follows that the appearance of the drink changes significantly in the pH range of 6 to 6.5. At a pH below 6 the drink is still milky, whereas it becomes transparent at a pH 6.5 or higher. The optimal pH in this setting is 6.75. It is found that extra homogenisation steps further improve the transparency.

The extinction of sample 5b was determined at a range of wavelengths varying from 400 to 800 nm. The results are given in Table 2.

**Table 2**

| Wavelength (nm) | Extinction |
|---|---|
| 400 | 1.0157 |
| 425 | 0.833 |
| 450 | 0.6947 |
| 475 | 0.5741 |
| 500 | 0.4661 |
| 525 | 0.3923 |
| 550 | 0.3373 |
| 575 | 0.2916 |
| 600 | 0.2546 |
| 625 | 0.2237 |
| 650 | 0.1981 |
| 675 | 0.176 |
| 700 | 0.175 |
| 725 | 0.1402 |
| 750 | 0.1264 |
| 775 | 0.1146 |
| 800 | 0.1144 |

From the table it follows that at a wavelength above 400 up till 800 nm the extinction of this drink is below 1.

Sample 5a from this example was subjected to microfiltration over a 0.2 µm filter. The extinction of the drink was reduced from 0.196 to 0.087.

### EXAMPLE 3

### Effect of temperature of the drink on transparency

The recipe for 1 kg milk drink of the invention is as follows.

4 g Pectin and 20 g sugar are mixed in dry form. The mixture thus obtained is dispersed in 267 g water at 80°C in a vortex and hydrated at the same temperature for 2 hours.

605 g skimmed UHT-milk is cooled to 4°C and 24 g sugar is added. The milk/sugar solution and pectin/sugar solution are mixed leading to a temperature of 20-25°C. The solution thus obtained is quickly cooled to 4°C in ice water.

An additional amount of either 80 g fruit concentrate or water is added. 20% (W/w) citric acid was added until a pH of 4 was reached.

After a pasteurisation treatment during 15 sec. at 90°C, the solution is cooled to about 55°C. Subsequently, the solution is homogenised twice at 200 bar and 55°C using a Rannie laboratory homogeniser. After cooling to 5°C the pH is adjusted with 8% sodium hydroxide to 6.75.

The drink thus obtained was once more homogenised at 100 bar. The extinction of the solution after 24 hours was 0.162. This drink was used for further experiments.

10 ml of the drink was filled in test tubes and where heated during 7 and 20 min. at 35, 45 and 55°C. Immediately after the heat treatment the tubes were cooled in ice and visually analysed. After 24 hours the extinction at 654 nm was determined. The results are given in table 3.

**Table 3**

| Sample No. | heating | | turbidity (visual) | | Extinction at 654 nm |
|---|---|---|---|---|---|
| | t ₍ₘᵢₙ₎ | T_{(°C)} | immediately after heating | after 24 hours at 4°C | after 24 hours |
| 1 (reference) | | <2 | transparent | transparent | 0.137 |
| 2 | 7 | 35 | transparent | transparent | 0.127 |
| 3 | 20 | 35 | transparent | transparent | 0.188 |
| 4 | 7 | 45 | milky white | transparent | 0.155 |
| 5 | 20 | 45 | milky white | transparent | 0.359 |
| 6 | 7 | 55 | milky white | transparent | 0.186 |
| 7 | 20 | 55 | milky white | transparent | 0.349 |

From the above table it follows that heating the samples leads to a turbidity that is reversed when the samples are stored in the fridge.

### EXAMPLE 4

### Effect of starting milk on final transparency of clear milk

This example shows the effect of the type of starting milk on the final transparency of a clear milk drink. Drinks were made from milk types of different origin and were all skimmed milks (fat < 0.06%). The following milk types were tested:
1. Defatted raw milk (source DMV-international, Veghel, The Netherlands)
2. Milk type 1 after pasteurisation for 3 minutes at 70°C
3. Milk type 1 after pasteurisation for 3 minutes at 90°C
4. Sterilised skim milk (commercial; non-labelled)
5. UHT-treated skim milk (Stassano - Campina Belgium, Aalter; Belgium)
6. UHT-treated skim milk (Eifel - Perle Hillesheim B3; Germany)
Ingredients (for 1 kg drink):
0.5 g pectin (JM 150; Herculus - Copenhagen (Denmark)
44 g sugar (Kristalsuiker; CSM)
605 g milk
350,5 g water (process water)
citric acid (Merck) (20% (w/w) solution)
8% sodium hydroxide solution

The drinks were prepared as follows. The pectin is first mixed with 20 gr sugar. The pectin/sugar blend is dispersed in 270 gr water of 80°C and allowed to hydrate for 2 hours. 24 grams sugar is dissolved in the cooled milk (4°C). The pectin solution and milk solution are mixed and cooled to 4°C by a counterflow chiller and 80 g cold water is added. The pH of the total mix is adjusted to 4 with 20% citric acid. Directly afterwards the pH is adjusted to either 6.0, 6,25, 6.5, 6,75 or 7 by addition of 8% sodium hydroxide.

The drinks are then stored at 4°C and after 24 hours the extinction of the drinks is determined at 654 nm. The extinctions are given in table 4.

**Table 4**

| Final PH | Extinction at 654 nm | | | | | |
|---|---|---|---|---|---|---|
| | 1 | 2 | 3 | 4 | 5 | 6 |
| 6.00 | 0.471 | 0.477 | 0.506 | 0.352 | 0.077 | 0.370 |
| 6.25 | 0.469 | 0.476 | 0.499 | 0.355 | 0.074 | 0.364 |
| 6.50 | 0.465 | 0.483 | 0.486 | 0.352 | 0.071 | 0.361 |
| 6.75 | 0.458 | 0.463 | 0.482 | 0.349 | 0.070 | 0.361 |
| 7.00 | 0.451 | 0.460 | 0.473 | 0.343 | 0.072 | 0.368 |

These results show that the type of milk has a large effect on the final transparency.

### EXAMPLE 5

### General recipe for clear milk drink without pectin

The clear dairy drink of the invention can also be made without the addition of pectin. This example shows that even better extinction values are obtained.

### Ingredients (for 1 kg drink):

44 g sugar (Kristalsuiker; CSM)
605 g milk
350,5 g water (process water)
citric acid (Merck) (20% (w/w) solution)
8% sodium hydroxide solution

The drinks were prepared as follows. 20 gr sugar is dispersed in 270 gr water of 80°C and allowed to hydrate for 2 hours. 24 gr sugar is dissolved in the cooled milk (4°C). The sugar solution and milk solution are mixed and cooled to 4°C by a counterflow chiller and 80 g cold water is added. The pH of the total mix is adjusted to 4 with 20% citric acid. Directly afterwards the pH is adjusted to either 6.0, 6,25, 6.5, 6,75, 7 or 7.25 by addition of 8% sodium hydroxide.

The drinks are then stored at 4°C and after 24 hours the extinction of the drinks is determined at 654 nm. The extinctions are given in the following table 5.

**Table 5**

| Sample | pH | Extinction (654 nm) | |
|---|---|---|---|
| | | not heated | heated (2 min. 142°C) |
| 1 | 6.0 | 0.074 | sediment |
| 2 | 6.25 | 0.063 | 0.785 |
| 3 | 6.5 | 0.065 | 0.142 |
| 4 | 6.75 | 0.066 | 0.096 |
| 5 | 7.0 | 0.088 | 0.156 |
| 6 | 7.25 | 0.119 | sediment |

### EXAMPLE 6

### Effect of acidification pH and final drink pH on transparency

### of a clear dairy drink

This example shows the effect of the acidification pH and final drink pH on the transparency of the clear dairy drink

### Ingredients (for 1 kg drink):

606 g UHT-treated skimmed milk (Stassano, Campina Belgium, Aalter-Belgium)
370 g water (process water)
24 g sugar (Kristalsuiker; CSM)
Citric acid (Merck) (20% (w/w solutions))
8% sodium hydroxide solution

The milk, water and sugar are mixed and the pH is brought to either pH 4.0 or 3.5 by addition of citric acid. After reaching the final pH the pH of the solution is brought to a final drink pH from 5-8 with steps of 0.25 using sodium hydroxide solution. After 48 hours of storage at 4°C, the extinction of the drinks is measured at 654 nm (Table 6).

**Table 6**

| pH drink | Extinction drink Acidification pH=4 | Extinction drink Acidification pH=3,5 |
|---|---|---|
| 5 | sediment | sediment |
| 5.25 | 3.601 | 3.19 |
| 5.5 | 0.1617 | 0.1213 |
| 5.75 | 0.1103 | 0.1033 |
| 6 | 0.1002 | 0.0998 |
| 6.25 | 0.1035 | 0.0974 |
| 6.5 | 0.0984 | 0.096 |
| 6.75 | 0.0972 | 0.0956 |
| 7 | 0.0957 | 0.094 |
| 7.25 | 0.0945 | 0.0932 |
| 7.5 | 0.0931 | 0.0928 |
| 7.75 | 0.0931 | 0.092 |
| 8 | 0.0906 | 0.0918 |

The data in table 6 show that good transparency can be obtained at pH-values of 5.5 and higher.

### EXAMPLE 7

### Effect of different acidifiers on the final transparency of a clear dairy drink

This example shows the effect of various acidifiers on the final transparency of clear dairy drinks. Previous experiments showed that good transparency was obtained when using (organic) acids belonging to the group of carboxylic acids such a citric acid and malic acid.

The acids tested are given in the table below. They are dissolved at 20% (w/w) in water or in case of less soluble acids, at their maximum solubility.

### Ingredients (for 1 kg drink):

606 g UHT-treated skimmed milk (Stassano, Campina Belgium, Aalter-Belgium)
370 g water (process water)
24 g sugar (Kristalsuiker; CSM)
8% sodium hydroxide solution

The milk, water and sugar are mixed and the pH is brought to pH 4.0 by addition of a 20% acid solution. After reaching the final pH the pH of the solution is brought to a final drink pH of 6.75 using a sodium hydroxide solution. Part of the drinks were heated for 10 minutes at 80°C. After 48 hours of storage at 4°C, the extinction of the heated and unheated drinks is measured at 654 nm (Table 7).

**Table 7**

| structural formula | trivial name | extinction |
|---|---|---|
| CH₃-COOH | acetic acid | 1.2 |
| COOH-COOH | oxalic acid | 3.0 |
| CH₃-CHOH-COOH | lactic acid | 0.9 |
| COOH-CH₂-COOH | malonic acid | 0.2 |
| COOH-CH₂-CH₂-COOH | succinic acid | 0.3 |
| COOH- (CH₂)₄-COOH | adipic acid | 0.9 |
| COOH-CHOH-CH₂-COOH | malic acid | 0.1 |
| COOH- (CH₂) ₃-COOH | glutaric acid | 0.6 |
| COOH-CH₂ (C (OH) COOH) -CH₂-COOH | citric acid | 0.1 |
| | hydrochloric acid | 2.4 |
| | boric acid | 2.8 |
| | phosphoric acid | 2.2 |

The extinction values show that best results are obtained with citric acid, malonic acid, succinic acid, and glutaric acid. These are all dicarboxylic acids with 3 to carbon atoms.

### EXAMPLE 8

### Standard recipe for clear dairy drink using rehomogenisation

### Ingredients (for 1 kg drink):

4 g pectin (JM 150; Hercules - Copenhagen (Denmark))
44 g sugar (Kristalsuiker; CSM)
605 g milk (UHT-skim milk; Stabilac)
80 g fruit concentrate (Red-fruit concentrate; Dohler Euro Citrus; Belgium)
citric acid (Merck) (20% (w/w) solution)
8% sodium hydroxide solution
267 g water (process water)

The pectin is first mixed with 20 g sugar The pectin/sugar blend is dispersed in 267 g water of 80°C and allowed to hydrate for 2 hours. 24 g sugar is dissolved in cooled UHT-milk (4°C). The pectin solution and milk solution are mixed and cooled to 4°C using a counterflow chiller. The fruit concentrate is then added to the cooled mix. The pH of the total mix is adjusted to 4 with 20% (w/w) citric acid.

The acidified mix is subjected to streaming pasteurisation at 85°C for 10 sec and immediately cooled to 55°C using a counterflow chiller. Subsequently the mix is homogenised at 250 bar at 55°C using a Ranny homogeniser (APV) and cooled to 7°C. The pH is increased to 6.75 by addition of 8% sodium hydroxide and the neutral drink is homogenised at 250 bar at room temperature.

### EXAMPLE 9

### Standard recipe for clear dairy nutritional drink

By adding for example a glutamine peptide preparation (such as WGE80GPA, DMV International, Veghel, NL) to the recipe of Example 3, a nutritional drink can be obtained.

### EXAMPLE 10

### Extinction of clear dairy drinks of the invention at various wavelengths

In order to establish whether the extinction of the drinks of the invention is dependent on the wavelength used for excitation, three drinks of pH 6.5, 6.75 and 7.0 were measured at various wavelengths.

The results are summarised in Table 8.

**Table 8**

| wavelength (nm) | pH=6.5 | pH=6.75 | pH=7.0 |
|---|---|---|---|
| 700 | 0.2138 | 0.1864 | 0.3027 |
| 705 | 0.2099 | 0.1834 | 0.2977 |
| 710 | 0.2061 | 0.1802 | 0.2928 |
| 715 | 0.2024 | 0.1771 | 0.288 |
| 720 | 0.1988 | 0.1738 | 0.2834 |
| 725 | 0.1951 | 0.1708 | 0.2787 |
| 730 | 0.1915 | 0.1679 | 0.2743 |
| 735 | 0.1878 | 0.1648 | 0.2697 |
| 740 | 0.1845 | 0.162 | 0.2655 |
| 745 | 0.1816 | 0.1594 | 0.262 |
| 750 | 0.1787 | 0.1565 | 0.2586 |
| 755 | 0.1755 | 0.1535 | 0.2551 |
| 760 | 0.1727 | 0.1509 | 0.2519 |
| 765 | 0.1701 | 0.1486 | 0.2486 |
| 770 | 0.1676 | 0.1465 | 0.2454 |
| 775 | 0.1651 | 0.1445 | 0.2423 |
| 780 | 0.1624 | 0.1423 | 0.239 |
| 785 | 0.1599 | 0.1403 | 0.2358 |
| 790 | 0.1577 | 0.1382 | 0.2325 |
| 795 | 0.1554 | 0.1362 | 0.229 |
| 800 | 0.1532 | 0.134 | 0.2262 |

### EXAMPLE 11

### Preparation of a clear dairy drink using LM type pectin

Instead of HM pectin used so far, the effect of LM pectin was determined.

Two drinks were prepared, having 0.5 and 1 gram LM pectin per litre drink, respectively.

The pectin (LM pectin, type GENU LM 106 AS-YA; Hercules, Copenhagen (Denmark) and 20 g sugar are mixed in dry form. The mixture obtained is dispersed in 267 g water at 80°C in a vortex and hydrated at the same temperature for 2 hours.

605 g skimmed UHT milk is cooled to 4°C and 24 g sugar is added. The milk/sugar solution and the pectin/sugar solution are mixed leading to a temperature of 20-25°C. The solution obtained is quickly cooled to 4°C in ice water. An additional amount of 80 grams of water is added. Then, 20 % (w/w) citric acid was added until a pH of 4 was reached (the temperature is still 4°C). Subsequently the pH was raised again to 6.75 using 8 % NaOH.

In table 9 below, the extinction of the drinks obtained is listed.

**Table 9**

| LM pectin concentration in the drink (w/w %) | Appearance at pH 6.75 | Extinction |
|---|---|---|
| 0.05 | Clear | 0.099 |
| 0.1 | Clear | 0.098 |

From these results it can be concluded that LM pectin is also a suitable pectin type for preparing clear dairy drinks according to the invention.

Also it can concluded that a homogenisation step can be omitted in the process.

### EXAMPLE 12

### Preparation of a clear milk drink powder

This example shows that a clear milk drink powder can be made which yield a clear milk drink after reconstitution of the clear milk drink powder in water.

### Ingredients (for 1 kg drink):

24 g sugar (Kristalsuiker; CSM)
605 g milk (UHT Stassano; Campina Belgium, Aalter, Belgium)
371 g water (process water)
citric acid (Merck) (20% (w/w) solution)
8% sodium hydroxide solution

The milk, water and sugar are mixed and the pH is brought to pH 4.0 by addition of citric acid solution. After reaching a pH of 4.0 the pH of the solution is brought to a final drink pH of 6.75 using sodium hydroxide solution. This solution was stored for 24 hours at 7°C resulting in a clear milk drink.

The clear milk drink was freeze dried with a Christ-LOC beta 1-16 freeze drier (Osterode, Germany) at a temperature of -20°C and a pressure of 1.2 mbar during 24 hrs.

The freeze dried powder was reconstituted in demineralised water at a concentration of 7,4% (w/w). This is equivalent with the amount of solids in the clear milk drink in liquid form. Table 10 shows the extinction values before and after freeze drying and reconstitution.

**Table 10**

| Sample | Extinction |
|---|---|
| Clear milk drink | 0.123 |
| Reconstituted drink after 1 hour | 0.121 |
| Reconstituted drink after 2 hours | 0.111 |
| Reconstituted drink after 72 hours | 0.097 |

The extinction values shows that the clear milk drink can be converted into a powder that, after reconstitution in water, leads to a clear milk drink with good transparency.

## Claims

1. Clear dairy drink, comprising a milk product selected from low-fat milk, skimmed milk, buttermilk and yoghurt as the main ingredient and having an extinction measured in a quartz cell having an optical path length of 1 cm in the range of 400 to 800 nm, in particular at 654 nm, of less than 1.

2. Clear dairy drink as claimed in claim 1, having an extinction in the range of 400 to 800 nm, in particular at 654 nm, of less than 0.8.

3. Clear dairy drink as claimed in claim 2, having an extinction in the range of 400 to 800 nm, in particular at 654 nm, of less than 0.6.

4. Clear dairy drink as claimed in claim 3, having an extinction in the range of 400 to 800 nm, in particular at 654 nm of less than 0.4, preferably less than 0.2.

5. Clear dairy drink as claimed in any one of claims 1-4, having a pH between 6.0 and 7.5, preferably between 6.5 and 7.0.

6. Method for producing a clear dairy drink as claimed in claims 1-5 comprising the steps of:
a) providing a milk product of acid pH;
b) optionally subjecting the product to a temperature treatment and/or homogenisation, and
c) adjusting the pH of the product to about neutral.

7. Method as claimed in claim 6, wherein the acid pH in step a) is between 3.8 and 4.2.

8. Method as claimed in claim 6 or 7, wherein the acid pH is provided by using an organic carboxylic acid having 3 to 6 carbon atoms.

9. Method as claimed in claims 6-8, wherein in step a) the milk product is further mixed with a negatively charged polysaccharide to obtain a mixture of acid pH.

10. Method as claimed in claim 9, wherein the negatively charged polysaccharide is selected from the group consisting of pectin, alginate, carboxymethyl cellulose and polyglycol alginate, and is preferably pectin.

11. Method as claimed in claim 10, wherein the provision of the mixture of acid pH is achieved by mixing pectin and buttermilk or yoghurt.

12. Method as claimed in claims 6-11, wherein the milk product is an UHT-treated milk product, in particular UHT-treated milk.

13. Method as claimed in claims 6-12, wherein the product further comprises one or more of the ingredients selected from the group consisting of sugars, fruit juice, fruit mix, food-grade acids, stabilisers, flavours, colorants, non-caloric sweeteners, maltodextrins, non-digestible fibers, nutritional ingredients.

14. Method as claimed in claims 6-13, wherein the temperature treatment is a pasteurisation treatment, preferably of 10-20 sec., preferably at 85-95°C.

15. Method as claimed in claims 6-14, wherein the homogenisation is performed at 150-250 bar, preferably 250 bar.

16. Method as claimed in claim 15, wherein the homogenisation is performed more than once.

17. Method as claimed in claims 6-16, wherein the about neutral pH is a pH between about 6 and 7.5, preferably between about 6.5 and 7, more preferably about 6.75.

18. Method as claimed in claims 6-17, further comprising as a step d) one ore more homogenisation steps.

19. Method as claimed in claim 18, wherein the homogenisation is performed at 150-250 bar, preferably 250 bar.

20. Method as claimed in claims 6-19, wherein the drink is cooled prior to step c).

21. Method as claimed in claims 6-19, wherein the drink is cooled after step c).

22. Method as claimed in claims 18 and 19, wherein the drink is cooled prior to step d).

23. Method as claimed in claims 18 and 19, wherein the drink is cooled after step d).

24. Method as claimed in claims 6-23, further comprising the step of drying the drink to obtain a clear dairy drink powder.

25. Method as claimed in claim 24, wherein the clear dairy drink is dried by means of freeze drying, spray drying, reduced pressure drying or microwave assisted drying.

26. Clear dairy drink obtainable by a method as claimed in any one of the claims 6-25, wherein the milk product is selected from low-fat milk, skimmed milk, buttermilk and yoghurt.

27. Clear dairy drink as claimed in claim 26, further comprising nutritional components, such as amino acid preparations, in particular a glutamine peptide preparation.

28. Clear dairy drink as claimed in claims 26 or 27, further comprising lactic acid bacteria and/or probiotic bacteria.

29. Clear dairy drink powder obtainable by drying a clear dairy drink as claimed in claims 26-28.

30. Clear dairy drink powder as claimed in claim 29, wherein the clear dairy drink is dried by means of freeze drying, spray drying, reduced pressure drying or microwave assisted drying.

## Patentansprüche

1. Klares Getränk auf der Basis von Milch umfassend ein Milchprodukt ausgewählt unter Milch von geringem Fettgehalt, Magermilch, Buttermilch und Joghurt als Hauptbestandteil und mit einer Extinktion, gemessen in einer Quarzzelle mit einer optischen Weglänge von 1 cm, im Bereich von 400 bis 800 nm, insbesondere 654 nm, von weniger als 1.

2. Klares Getränk auf der Basis von Milch nach Anspruch 1, das eine Extinktion im Bereich von 400 bis 800 nm, insbesondere bei 654 nm oder weniger, von 0,8 aufweist.

3. Klares Getränk auf der Basis von Milch nach Anspruch 2, das eine Extinktion im Bereich von 400 bis 800 nm, insbesondere bei 654 nm oder weniger, von 0,6 aufweist.

4. Klares Getränk auf der Basis von Milch nach Anspruch 3, das eine Extinktion im Bereich von 400 bis 800 nm, insbesondere bei 654 nm von weniger als 0,4, bevorzugt weniger als 0,2 aufweist.

5. Klares Getränk auf der Basis von Milch nach einem der Ansprüche 1-4, das einen pH-Wert zwischen 6,0 und 7,5, bevorzugt zwischen 6,5 und 7,0 aufweist.

6. Verfahren zum Herstellen eines klaren Getränks auf der Basis von Milch nach Ansprüchen 1 - 5, umfassend die Schritte des:
a) Bereitstellens eines Milchprodukts von saurem pH-Wert
b) wahlweise Unterwerfen des Produkts einer Temperaturbehandlung und/oder Homogenisierung und
c) Einstellen des pH-Werts des Produkts auf etwa neutral.

7. Verfahren nach Anspruch 6, wobei der saure pH-Wert in Schritt a) zwischen 3,8 und 4,2 liegt.

8. Verfahren nach Anspruch 6 oder 7, wobei der saure pH-Wert durch Anwendung einer organischen Carbonsäure mit 3 bis 6 Kohlenstoffatomen bereitgestellt wird.

9. Verfahren nach Ansprüchen 6-8, wobei in Schritt a) das Milchprodukt noch weiter mit einem negativ geladenen Polysaccharid zur Erzielung einer Mischung von saurem pH-Wert gemischt wird.

10. Verfahren nach Anspruch 9, wobei das negativ geladene Polysaccharid aus der Gruppe ausgewählt wird bestehend aus Pektin, Alginat, Carboxymethylcellulose und Polyglykolalginat, und bevorzugt Pektin ist.

11. Verfahren nach Anspruch 10, wobei das Bereitstellen der Mischung von saurem pH-Wert durch Mischen von Pektin und Buttermilch oder Joghurt erreicht wird.

12. Verfahren nach den Ansprüchen 6-11, wobei das Milchprodukt ein UHT-behandeltes Milchprodukt, insbesondere UHT-behandelte Milch ist.

13. Verfahren nach den Ansprüchen 6-12, wobei das Produkt des Weiteren ein oder mehrere der Bestandteile umfasst ausgewählt aus der Gruppe bestehend aus Zuckern, Obstsaft, Obstmischung, Säuren von Nahrungsmittelqualität, Stabilisatoren,Geschmackstoffe,Farbstoffe, kalorienfreien Süßstoffen, Maltodextrinen, Ballaststoffen, nährreichen Bestandteilen.

14. Verfahren nach den Ansprüchen 6-13, wobei die Temperaturbehandlung eine Pasteurisierungsbehandlung bevorzugt von 10-20 sec, bevorzugt bei 85-95°C ist.

15. Verfahren nach den Ansprüchen 6-14, wobei die Homogenisierung bei 150-250 bar, bevorzugt 250 bar durchgeführt wird.

16. Verfahren nach Anspruch 15, wobei die Homogenisierung mehr als einmal durchgeführt wird.

17. Verfahren nach den Ansprüchen 6-16, wobei der ungefähr neutrale pH-Wert ein pH-Wert zwischen etwa 6 und 7,5, bevorzugt zwischen etwa 6,5 und 7, noch bevorzugter etwa 6,75 ist.

18. Verfahren nach den Ansprüchen 6-17, des Weiteren umfassend als Schritt d) einen oder mehrere Homogenisierungsschritte.

19. Verfahren nach Anspruch 18, wobei die Homogenisierung bei 150-250 bar, bevorzugt 250 bar durchgeführt wird.

20. Verfahren nach Ansprüchen 6-19, wobei das Getränk vor Schritt c) gekühlt wird.

21. Verfahren nach Ansprüchen 6-19, wobei das Getränk nach Schritt c) gekühlt wird.

22. Verfahren nach den Ansprüchen 18 und 19, wobei das Getränk vor Schritt d) gekühlt wird.

23. Verfahren nach den Ansprüchen 18 und 19, wobei das Getränk nach Schritt d) gekühlt wird.

24. Verfahren nach den Ansprüchen 6-23, des Weiteren umfassend den Schritt des Trocknens des Getränks, um ein Pulver für ein klares Getränk auf der Basis von Milch zu erhalten.

25. Verfahren nach Anspruch 24, wobei das klare Getränk auf der Basis von Milch durch Gefriertrocknen, Sprühtrocknen, Trocknen bei reduziertem Druck oder mikrowellenunterstütztes Trocknen getrocknet wird.

26. Klares Getränk auf der Basis von Milch erhältlich durch ein Verfahren durch einen der Ansprüche 6-25, wobei das Milchprodukt unter Milch von niedrigem Fettgehalt, Magermilch, Buttermilch und Joghurt ausgewählt wird.

27. Klares Getränk auf der Basis von Milch nach Anspruch 26, des Weiteren umfassend nährreiche Komponenten wie Aminosäurezubereitungen, insbesondere eine Glutaminpeptidzubereitung.

28. Klares Getränk auf der Basis von Milch nach Ansprüchen 26 oder 27, des Weiteren umfassend Milchsäurebakterien und/oder probiotische Bakterien.

29. Pulver für ein klares Getränk auf der Basis von Milch erhältlich durch Trocknen eines klaren Getränks auf der Basis von Milch nach Ansprüchen 26-28.

30. Pulver für ein klares Getränk auf der Basis von Milch nach Anspruch 29, wobei das klare Getränk auf der Basis von Milch durch Gefriertrocknen, Sprühtrocknen, Trocknen bei reduziertem Druck oder mikrowellenunterstütztes Trocknen getrocknet wird.

## Revendications

1. Boisson lactée claire, comprenant un produit laitier sélectionné parmi du lait à faible teneur en matière grasse, du lait écrémé, du babeurre et du yaourt comme l'ingrédient principal et présentant une extinction mesurée dans une cuve en quartz présentant une longueur du chemin optique d'1 cm dans la gamme de 400 à 800 nm, en particulier à 654 nm, inférieure à 1.

2. Boisson lactée claire telle que revendiquée à la revendication 1, présentant une extinction dans la gamme de 400 à 800 nm, en particulier à 654 nm, inférieure à 0,8.

3. Boisson lactée claire telle que revendiquée à la revendication 2, présentant une extinction dans la gamme de 400 à 800 nm, en particulier à 654 nm, inférieure à 0,6.

4. Boisson lactée claire telle que revendiquée à la revendication 3, présentant une extinction dans la gamme de 400 à 800 nm, en particulier à 654 nm inférieure à 0,4, de préférence inférieure à 0,2.

5. Boisson lactée claire telle que revendiquée dans l'une quelconque des revendications 1 à 4, présentant un pH entre 6,0 et 7,5, de préférence entre 6,5 et 7,0.

6. Procédé de production d'une boisson lactée claire telle que revendiquée aux revendications 1 à 5, comprenant les étapes consistant à :
a) fournir un produit laitier au pH acide ;
b) soumettre éventuellement le produit à un traitement thermique et/ou à une homogénéisation, et
c) ajuster le pH du produit à un pH environ neutre.

7. Procédé tel que revendiqué à la revendication 6, dans lequel le pH acide à l'étape a) est entre 3,8 et 4,2.

8. Procédé tel que revendiqué à la revendication 6 ou à la revendication 7, dans lequel le pH acide est fourni en utilisant un acide carboxylique organique présentant de 3 à 6 atomes de carbone.

9. Procédé tel que revendiqué aux revendications 6 à 8, dans lequel à l'étape a), le produit laitier est davantage mélangé avec un polysaccharide chargé négativement pour obtenir un mélange au pH acide.

10. Procédé tel que revendiqué à la revendication 9, dans lequel le polysaccharide chargé négativement est sélectionné dans le groupe constitué de pectine, d'alginate, de carboxyméthylcellulose et d'alginate de polyglycol, et est de préférence de la pectine.

11. Procédé tel que revendiqué à la revendication 10, dans lequel la fourniture du mélange au pH acide est obtenue en mélangeant de la pectine avec du babeurre ou du yaourt.

12. Procédé tel que revendiqué aux revendications 6 à 11, dans lequel le produit laitier est un produit laitier à traitement UHT, en particulier du lait à traitement UHT.

13. Procédé tel que revendiqué aux revendications 6 à 12 dans lequel le produit comprend en outre un ou plusieurs ingrédients parmi les ingrédients sélectionnés dans le groupe constitué de sucres, de jus de fruits, de mélange de fruits, d'acides de qualité alimentaire, d'agents stabilisants, d'arômes, de colorants, d'édulcorants non caloriques, de maltodextrines, de fibres non digestibles, d'ingrédients nutritionnels.

14. Procédé tel que revendiqué aux revendications 6 à 13, dans lequel le traitement thermique est un traitement de pasteurisation, de préférence de 10 à 20 secondes, de préférence à 85 - 95° C.

15. Procédé tel que revendiqué aux revendications 6 à 14, dans lequel l'homogénéisation est réalisée à 150 - 250 bars, de préférence à 250 bars.

16. Procédé tel que revendiqué à la revendication 15, dans lequel l'homogénéisation est réalisée plus d'une fois.

17. Procédé tel que revendiqué aux revendications 6 à 16, dans lequel le pH environ neutre est un pH entre 6 et 7,5, de préférence entre 6,5 et 7, plus préférablement d'environ 6,75.

18. Procédé tel que revendiqué aux revendications 6 à 17, comprenant en outre en guise d'étape d) une ou plusieurs étapes d'homogénéisation.

19. Procédé tel que revendiqué à la revendication 18, dans lequel l'homogénéisation est réalisée à 150 - 250 bars, de préférence à 250 bars.

20. Procédé tel que revendiqué aux revendications 6 à 19, dans lequel la boisson est refroidie avant l'étape c).

21. Procédé tel que revendiqué aux revendications 6 à 19, dans lequel la boisson est refroidie après l'étape c).

22. Procédé tel que revendiqué aux revendications 18 et 19, dans lequel la boisson est refroidie avant l'étape d) .

23. Procédé tel que revendiqué aux revendications 18 et 19, dans lequel la boisson est refroidie après l'étape d).

24. Procédé tel que revendiqué aux revendications 6 à 23, comprenant en outre l'étape consistant à sécher la boisson pour obtenir une poudre de boisson lactée claire.

25. Procédé tel que revendiqué à la revendication 24, dans lequel la boisson lactée claire est séchée par lyophilisation, atomisation, séchage par pression réduite ou séchage assisté par micro-ondes.

26. Boisson lactée claire pouvant être obtenue par un procédé tel que revendiqué dans l'une quelconque des revendications 6 à 25, dans laquelle le produit laitier est sélectionné parmi du lait à faible teneur en matière grasse, du lait écrémé, du babeurre et du yaourt.

27. Boisson lactée claire telle que revendiquée à la revendication 26, comprenant en outre des composants nutritionnels, tels que des préparations d'acides aminés, en particulier une préparation de peptides glutaminés.

28. Boisson lactée claire telle que revendiquée à la revendication 26 ou à la revendication 27, comprenant en outre des bactéries d'acide lactique et/ou des bactéries probiotiques.

29. Poudre de boisson lactée claire pouvant être obtenue par séchage d'une boisson lactée claire telle que revendiquée aux revendications 26 à 28.

30. Poudre de boisson lactée claire telle que revendiquée à la revendication 29, dans laquelle la boisson lactée claire est séchée par lyophilisation, atomisation, séchage par pression réduite ou séchage assisté par micro-ondes.
